# EUROPÄISCHE PATENTSCHRIFT

(11) **EP 3 059 926 B1**
(45) Veröffentlichungstag und Bekanntmachung des Hinweises auf die Patenterteilung: **16.08.2017**
(21) Anmeldenummer: 16165013.0
(22) Anmeldetag: 30.12.2013
(51) Int. Cl.: H04L 29/06

(54) **VERFAHREN ZUM ERKENNEN EINES DENIAL-OF-SERVICE ANGRIFFS IN EINEM KOMMUNIKATIONSNETZWERK**
METHOD FOR DETECTING A DENIAL OF SERVICE ATTACK IN A COMMUNICATION NETWORK
PROCÉDÉ DE DÉTECTION D'UNE ATTAQUE PAR DÉNI DE SERVICE DANS UN RÉSEAU DE COMMUNICATION

(43) Veröffentlichungstag der Anmeldung: 24.08.2016
(62) Teilanmeldung aus: 13199823.9
(73) Patentinhaber: Deutsche Telekom AG, 53113 Bonn (DE)
(72) Erfinder: EGGERT, Markus, 53773 Hennef (DE)
(74) Vertreter: Patentship Patentanwaltsgesellschaft mbH

(56) Entgegenhaltungen:
- US-A1- 2006 280 121
- US-A1- 2013 111 589
- US-B1- 7 971 253

## Beschreibung

Die vorliegende Erfindung betrifft ein Verfahren zum Erkennen eines Denial-of-Service Angriffs (Dienstverweigerungsangriff) in einem Kommunikationsnetzwerk und einen Überwachungsserver zum Erkennen eines solchen Denial-of-Service-Angriffs.

Als Denial of Service (DoS, englisch für: Dienstverweigerung) wird in der digitalen Datenverarbeitung die Verweigerung eines Dienstes bezeichnet, welche beispielsweise auf eine Überlastung eines Infrastruktursystems zurückzuführen ist. Die Überlastung kann insbesondere durch einen DoS-Angriff auf einen Server, einen Rechner oder sonstige Netzwerkkomponenten in einem Datennetz verursacht werden. DoS-Angriffe basieren in der Regel auf einer Überflutung eines Servers mit Anfragen. Im Falle des TCP-Transportprotokolls geschieht das z.B. durch sogenanntes SYN-Flooding, bei dem eine Flutung des Netzwerks mit offenen SYN Anfragen bewirkt wird.

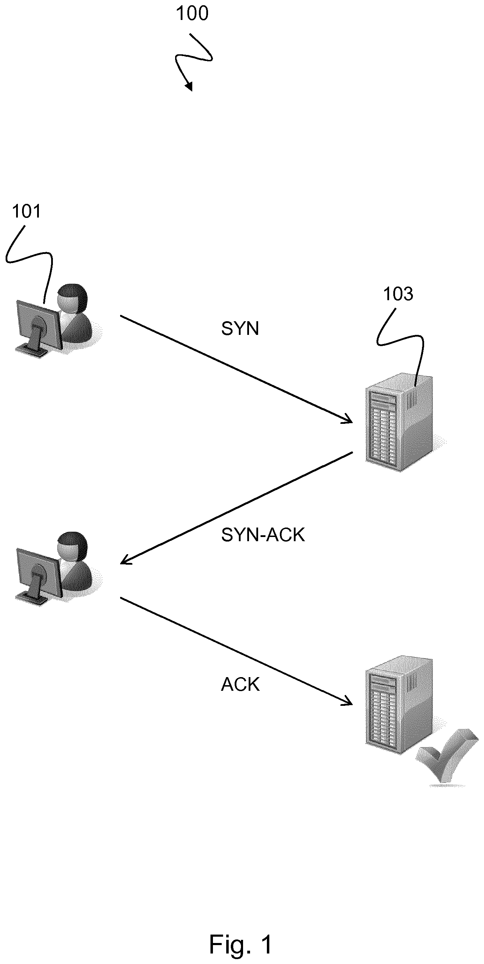

Fig. 1 zeigt einen Verbindungsaufbau 100 einer TCP-Verbindung in einem Kommunikationssystem mit einem Client 101 sowie einem Server 103. Der Client 101 und der Server 103 führen ein so genanntes Dreiwege-Handshake durch, um die Verbindung einzurichten. Der Verbindungsaufbau ist wie folgt: Zuerst sendet der Client 101 an den Server 103 eine Anfrage SYN ("Synchronize"), wodurch der Client 101 zum Aussenden eines Antwortpakets SYN-ACK an den Server 103 aufgefordert wird. Hierzu wird mit der Anfrage SYN als Antwortnetzwerkadresse die Quellnetzwerkadresse des Clients 101 übermittelt. Daraufhin sendet der Server 103 an den Client 101 ein Antwortpaket SYN-ACK ("Synchronize Acknowledge"). Daraufhin sendet der Client 101 an den Server 103 ein Paket mit dem Flag ACK ("Acknowledge")m um den Verbindungsaufbau zu bestätigen. Die Verbindung ist nun hergestellt. Mit einem Flag wird eine binäre Variable oder ein Statusindikator bezeichnet, welcher als Hilfsmittel zur Kennzeichnung bestimmter Zustände benutzt werden kann. Ein Flag kann gesetzt, gelöscht oder ausgelesen werden.

Bei einem DoS-Angriff mit SYN-Flooding übermittelt der Client 101 als Angreifer mit der Anfrage SYN jedoch eine Antwortnetzwerkadresse, welche sich von der Quellnetzwerkadresse des Clients 101 unterscheidet.

Der Server 103 antwortet dann mit SYN-ACK Paketen auf die SYN-Anfragen, wobei diese SYN-ACK Pakete nun an die gefälschten Antwortnetzwerkadressen ausgesendet werden. Dadurch werden keine ACK-Antworten an den Server 103 übertragen, auf die der Server 103 jedoch wartet. Herbei werden jedoch Ressourcen des Servers 103 in Anspruch genommen, sodass bei einer größeren Anzahl von derartigen Anfragen die freien Ressourcen des Servers 103 aufgebraucht werden, sodass der Server 103 keine neuen Verbindungen mehr aufbauen kann, was zur Zugriffsverweigerung (Denial of Service) führt.

Das Dokument US2013111589 offenbart ein Verfahren zum Erkennen eines ARP-Angriffs. Dabei wird, nach unaufgefordertem Empfangen eines ersten ARP-Pakets, ein korrespondierendes ARP-Request ausgesendet. Das korrespondierende Antwort-Paket wird verglichen mit dem ersten ARP-Paket und wenn die Input-Porte nicht gleich sind, wird konkludiert, daß ein Angriff stattgefunden hat. Es ist die Aufgabe der vorliegenden Erfindung, ein neues Verfahren zu schaffen zur Erkennung eines Denial-of-Service Angriffs in einem Computernetzwerk. Diese Aufgabe wird durch die Merkmale der unabhängigen Ansprüche gelöst. Vorteilhafte Weiterbildungsformen sind Gegenstand der abhängigen Ansprüche.

Die vorliegende Erfindung basiert auf der Erkenntnis, dass die bei DoS-Angriffen verwendeten, gefälschten Antwortadressen durch einen oder mehrere Angreifer oft zufällig gewählt werden. Aus diesem Grund steigt mit einer steigenden Anzahl von ausgesendeten Anfragen und somit der unterschiedlichen Antwortadressen auch die Wahrscheinlichkeit an, dass die durch einen angegriffenen Server ausgesendeten SYN-ACK Antwortpakete durch einen Überwachungsserver, welcher eine oder mehrere, beispielsweise mehrere 100 Netzwerkadressen, überwacht, unaufgefordert empfangen werden können. Zur Detektion eines DoS-Angriffs reicht daher der unaufgeforderte Empfang eines einzigen Antwortpakets unter der für einen DoS-Angriff verwendeten Antwortnetzwerkadresse.

Zur Detektion eines DoS-Angriffs ist daher ein Überwachungsserver vorgesehen, welchem eine oder mehrere, beispielsweise mehrere 100 Netzwerkadressen, beispielsweise aus einem Adressraum zugeordnet sind. Wird durch den Überwachungsserver ein Antwortpaket empfangen, das nicht durch den Überwachungsserver an die Antwort auf eine Anfrage enthält, welche nicht durch den Überwachungsserver angefragt wurde, so weist dies auf eine gefälschte Antwortadresse hin und damit auf einen Denial-of-Service Angriff. Je größer der Adressraum, d.h. die Anzahl der überwachten Netzwerkadressen, ist, den der Überwachungsserver überwachen kann, desto höher ist die Wahrscheinlichkeit, dass eine gefälschte Quelladresse als Antwortadresse in diesen Adressraum fällt und der Überwachungsserver den DoS Angriff wie vorstehend ausgeführt detektieren kann.

Als Server wir vorliegend ein Computer bezeichnet, der Rechenleistung, Speicher, Daten und Dienste bereitstellt und Zugriffsrechte verwaltet. In den meisten Fällen handelt es sich um einen sehr leistungsfähigen Computer, der je nach Anwendungsfall mit Hardware und Software ausgestattet ist. Auf dem Server können mehrere Dienste und Anwendungen ausgeführt werden, die von anderen Netzwerk-Teilnehmern über das Netzwerk angefordert werden können.

Eine Netzwerkentität bzw. eine Kommunikationsentität ist eine Einheit, Funktionseinheit oder Instanz in einem Kommunikationsnetzwerk, welche Signale von dem Kommunikationsnetzwerk empfangen und/oder Signale in das Kommunikationsnetzwerk senden kann. Eine Netzwerk- oder Kommunikationsentität kann beispielsweise ein Server, ein Modem, eine Netzwerkkarte, ein Netzwerkabschluss oder ein Netzwerkadapter sein. Eine Netzwerk- oder Kommunikationsentität kann Hardware und/oder Software umfassen, um die technischen Funktionen der Kommunikationsentität zu realisieren. Die Netzwerk- oder Kommunikationsentität kann Mikroprozessoren, Mikrochips, ASICs und/oder DSPs umfassen.

Weiterhin werden die folgenden Abkürzungen verwendet:

### TCP/IP:

Transmission Control Protocol / Internet Protocol ist eine Familie von Netzwerkprotokollen, die auch als Internetprotokollfamilie bezeichnet wird. Die Identifizierung der am Netzwerk teilnehmenden Rechner, die auch als Hosts bezeichnet werden, geschieht über IP-Adressen.

### IP:

Internet Protokoll. Das IP bildet die erste vom Übertragungsmedium unabhängige Schicht der Internetprotokoll-Familie. Mittels IP-Adresse und Subnetzmaske für IPv4 (siehe RFC 791), bzw. Präfixlänge bei IPv6 (siehe RFC 2460) können Computer innerhalb eines Netzwerkes in logische Einheiten, so genannte Subnetze, gruppiert werden. Damit ist es möglich, Computer in größeren Netzwerken zu adressieren und ihnen IP-Pakete zu senden, da logische Adressierung die Grundlage für Routing (Wegewahl und Weiterleitung von Netzwerkpaketen) ist.

### TCP:

Transmission Control Protocol bzw. Übertragungs-Steuerungsprotokoll (siehe RFC 793). TCP ist ein zuverlässiges, verbindungsorientiertes, paketvermitteltes Transportprotokoll in Computernetzwerken. Es ist Teil der Internetprotokollfamilie.

### UDP:

User Datagram Protocol bzw. Benutzerdatensegmentprotokoll (siehe RFC 768). UDP ist ein minimales, verbindungsloses Netzwerkprotokoll, das zur Transportschicht der Internetprotokollfamilie gehört. Aufgabe von UDP ist es, Daten, die über das Internet übertragen werden, der richtigen Anwendung zukommen zu lassen.

### DNS:

Domain Name System (siehe RFC 882, RFC 883). Das DNS ist ein Dienst innerhalb eines IP-basierten Netzwerks, der zur Beantwortung von Anfragen zur Namensauflösung genutzt wird. Der Benutzer kennt die Domain, d.h. Namen eines Rechners im Internet und sendet diese als Anfrage in das Internet. Die Domain wird dann vom DNS in die zugehörige IP-Adresse umgewandelt und als Antwort dem Benutzer mitgeteilt.

### ICMP:

Internet Control Message Protocol (siehe RFC 792). ICMP dient in Rechnernetzwerken dem Austausch von Informations- und Fehlermeldungen über das Internet-Protokoll.

### Ping:

Ping ist ein Diagnose-Werkzeug, mit dem überprüft werden kann, ob ein bestimmter Host in einem IP-Netzwerk erreichbar ist. Ping sendet ein ICMP-"Echo-Request"-Paket, auch "Ping" genannt, an die Zieladresse des zu überprüfenden Hosts. Der Empfänger muss, sofern er das Protokoll unterstützt, eine Antwort, d.h. ein ICMP "Echo-Reply" auch "Pong" genannt, zurücksenden.

### HTTP:

Hypertext Transfer Protocol (siehe RFC 2616). HTTP ist ein Protokoll zur Übertragung von Daten über ein Netzwerk, das hauptsächlich zum Laden von Webseiten aus dem World Wide Web (WWW) in einen Webbrowser genutzt wird.

Gemäß einem Aspekt betrifft die Erfindung ein Verfahren zum Erkennen eines Denial-of-Service-Angriffs in einem Kommunikationsnetzwerk, in dem ein Angreifer mit einer Quellnetzwerkadresse eine Anfrage mit einer Antwortnetzwerkadresse an einen Zielserver sendet, um von dem Zielserver eine Übersendung eines Antwortpaketes an die Antwortnetzwerkadresse anzufordern, wobei die Antwortnetzwerkadresse sich von der Quellnetzwerkadresse des Angreifers unterscheidet, wobei der Zielserver ansprechend auf den Empfang der Anfrage ein Antwortpaket an die Antwortnetzwerkadresse sendet, und wobei das Verfahren die folgenden Schritte umfasst: Empfangen eines von dem Zielserver stammenden Datenpaketes durch einen Überwachungsserver, welchem die Antwortnetzwerkadresse zugeordnet ist; und Ausgeben eines Warnsignals durch den Überwachungsserver, falls das empfangene Datenpaket ein durch den Überwachungsserver unaufgefordert empfangenes Antwortpaket ist.

Die Anfrage kann eine Verbindungsanfrage, beispielsweise eine TCP-Verbindungsanfrage oder eine DNS-Anfrage bzw. DNS-Verbindungsanfrage bzw. eine UDP-Anfrage bzw. UDP-Verbindungsanfrage sein.

Der Vorteil eines solchen Verfahrens ist, dass der Überwachungsserver wie ein beliebiger Client in dem Kommunikationsnetzwerk eingerichtet sein kann. Der Überwachungsserver kann somit einfach installiert werden ohne dass Umkonfigurationen an dem Kommunikationsnetzwerk notwendig werden. Der Überwachungsserver braucht nur Datenpakete empfangen und kann mittels eines einfachen Auswerteverfahrens feststellen, ob das empfangene Paket ein unaufgefordert empfangenes Antwortpaket ist.

Gemäß einer Ausführungsform des Verfahrens wird aus dem empfangenen Datenpaket eine Zielnetzwerkadresse des Zielservers extrahiert und durch das Warnsignal angezeigt.

Der Vorteil eines solchen Verfahrens liegt darin, dass es sowohl anzeigen kann, dass ein Denial-of-Service Angriff stattfindet als auch das Ziel des DoS Angriffs feststellen kann.

Der Betreiber des Kommunikationsnetzwerks wird also zeitnah gewarnt und hat die Möglichkeit, geeignete Gegenmaßnahmen auf dem bzw. mit dem angegriffenen Zielserver durchzuführen.

Gemäß einer Ausführungsform des Verfahrens wird das Warnsignal über ein Kommunikationsnetzwerk an den Zielserver oder an eine Netzwerküberwachungsentität durch eine weitere Netzwerkentität, welche sich von dem Überwachungsserver unterscheidet, ausgesendet, um das Vorliegen eines Denial-of-Service Angriffs anzuzeigen.

Der Vorteil eines solchen Verfahrens liegt darin, dass dadurch der Überwachungsserver nicht enttarnt wird und nicht zum Ziel von DoS Attacken wird. Das Kommunikationsnetzwerk, über das das Warnsignal an den Zielserver gesendet wird, kann ein anderes Kommunikationsnetzwerk sein als das, welches der Überwachungsserver kontrolliert.

Gemäß einer Ausführungsform des Verfahrens ist dem Überwachungsserver eine Mehrzahl von unterschiedlichen Antwortnetzwerkadressen zugeordnet, wobei die Mehrzahl der unterschiedlichen Antwortnetzwerkadressen durch den Überwachungsserver überwacht wird, um den Empfang des Datenpaketes zu detektieren.

Der Vorteil eines solchen Verfahrens liegt darin, dass bei einer Mehrzahl von dem Überwachungsserver zugeordneten Netzwerkadressen die Wahrscheinlichkeit größer ist, ein mit gefälschter Quelladresse versehenes Paket zu empfangen, so dass die Detektion eines DoS Angriffs schneller erfolgen kann.

Gemäß einer Ausführungsform umfasst das Verfahren ein Empfangen einer Mehrzahl von Datenpaketen durch den Überwachungsserver, wobei die empfangenen Datenpakete durch den Zielserver an Antwortnetzwerkadressen ausgesendet wurden, welche dem Überwachungsserver zugeordnet sind; ein Erfassen einer Anzahl von Antwortpaketen in der Mehrzahl der Datenpakete, welche durch den Überwachungsserver unaufgefordert empfangen wurden; und ein Ausgeben des Warnsignals durch den Überwachungsserver, falls die Anzahl der erfassten Antwortpakete einen vorgegebenen Schwellwert erreicht oder überschreitet.

Der Vorteil eines solchen Verfahrens liegt darin, dass die Zuverlässigkeit der Detektion eines DoS Angriffs höher ist, wenn eine Mehrzahl von empfangenen Datenpaketen zur Auswertung zur Verfügung steht.

Gemäß einer Ausführungsform des Verfahrens ist ein durch den Überwachungsserver empfangenes Datenpaket ein unaufgefordert empfangenes Antwortpaket, wenn das empfangene Antwortpaket nicht auf eine durch den Überwachungsserver an den Zielserver ausgesendete Anfrage zurückzuführen ist oder wenn das empfangene Antwortpaket von dem Zielserver stammt.

Der Vorteil eines solchen Verfahrens liegt darin, dass ein unaufgefordert empfangenes Antwortpaket leicht erkannt werden kann. Der Überwachungsserver braucht nur einen Speicher mit gesendeten Anfragen anlegen und vergleichen ob die empfangenen Antwortpakete als Antwort auf eine der im Speicher gehaltenen Anfragen empfangen wurden. Ein solcher Speicher kann beispielsweise der Speicher des Netzwerkstacks sein, in dem offene Anfragen gespeichert werden. Falls der Überwachungsserver nur Pakete empfängt aber keine aussendet, ist das Verfahren noch einfacher. Dann stellt nämlich jedes empfangene Paket entweder eine Anfrage oder ein unaufgefordert empfangenes Antwortpaket dar. Bei einem Antwortpaket an die Netzwerkadresse des Überwachungsservers kann er sofort einen DoS Angriff detektieren.

Gemäß einer Ausführungsform umfasst das Verfahren ein Bestimmen, ob das empfangene Antwortpaket auf eine durch den Überwachungsserver an den Zielserver ausgesendete Anfrage zurückzuführen ist; und ein Kennzeichnen des empfangenen Antwortpaketes als unaufgefordert empfangenes Antwortpaket, falls das empfangene Antwortpaket nicht auf eine durch den Überwachungsserver an den Zielserver ausgesendete Anfrage zurückzuführen ist.

Der Vorteil eines solchen Verfahrens liegt darin, dass das Bestimmen, ob das empfangene Antwortpaket auf eine durch den Überwachungsserver an den Zielserver ausgesendete Anfrage zurückzuführen ist, einfach durchzuführen ist, wie oben aufgezeigt. Das Kennzeichnen kann der Überwachungsserver entweder durch Setzen eines Flags in dem empfangenen Paket machen, was den Vorteil hat, dass das Warnsignal über das Kommunikationsnetzwerk verbreitet werden kann oder der Überwachungsserver kann das Kennzeichnen über das Versenden einer Nachricht in einem externen Netzwerk durchführen, was den Vorteil hat, dass das Kommunikationsnetzwerk, in dem der Angreifer agiert, nicht beeinflusst wird, so dass sich der Angreifer weiterhin sicher fühlt und damit leichter identifiziert werden kann.

Gemäß einer Ausführungsform des Verfahrens ist das empfangene Antwortpaket eines der folgenden Antwortpakete: eine Synchronisationsbestätigung SYN-ACK des TCP Übertragungssteuerungsprotokolls, wobei die Anfrage eine Synchronisationsanfrage SYN des TCP Übertragungssteuerungsprotokolls ist; ein ICMP-Echo-Datenpaket, insbesondere ein ICMP-Datenpaket des Typs Echo Request; ein DNS-Datenpaket; oder ein User-Datagram-Protocol-Datenpaket.

Der Vorteil eines solchen Verfahrens liegt darin, dass es bei allen gebräuchlichen Netzwerkprotokollen, die auf Anfrage und Bestätigungsnachrichten und/oder Antwortnachrichten basieren, effektiv eingesetzt werden kann.

Gemäß einem Aspekt betrifft die Erfindung ein Computerprogramm mit einem Programmcode zum Ausführen eines solchen Verfahrens wenn der Programmcode mittels einer Datenverarbeitungsanlage ausgeführt wird.

Der Vorteil eines solchen Computerprogramms liegt darin, dass das Computerprogramm flexibel ausführbar ist und jederzeit Änderungen an dem Programmcode vorgenommen werden können, wenn sich herausstellt, dass kundenspezifische Anpassungen an dem Verfahren vorgenommen werden müssen.

Gemäß einem Aspekt betrifft die Erfindung einen Überwachungsserver zum Erkennen eines Denial-of-Service-Angriffs in einem Kommunikationsnetzwerk, in dem ein Angreifer mit einer Quellnetzwerkadresse eine Anfrage mit einer Antwortnetzwerkadresse an einen Zielserver sendet, um von dem Zielserver eine Übersendung eines Antwortpaketes an die Antwortnetzwerkadresse anzufordern, wobei die Antwortnetzwerkadresse sich von der Quellnetzwerkadresse des Angreifers unterscheidet, wobei der Zielserver ansprechend auf den Empfang der Anfrage ein Antwortpaket an die Antwortnetzwerkadresse sendet, wobei dem Überwachungsserver zumindest eine Antwortnetzwerkadresse zugeordnet ist, und wobei der Überwachungsserver die folgenden Merkmale umfasst: eine Empfangsschnittstelle zum Empfangen eines von dem Zielserver stammenden Datenpaketes an eine Antwortadresse des Überwachungsservers; und eine Prozessoreinrichtung, welche ausgebildet ist, ein Warnsignal auszugeben, falls das empfangene Datenpaket ein durch den Überwachungsserver unaufgefordert empfangenes Antwortpaket ist.

Der Vorteil eines solchen Überwachungsservers liegt darin, dass der Überwachungsserver wie ein beliebiger Client in dem Kommunikationsnetzwerk eingerichtet sein kann. Der Überwachungsserver kann somit einfach installiert werden ohne dass Umkonfigurationen an dem Kommunikationsnetzwerk notwendig werden. Der Überwachungsserver braucht nur Datenpakete empfangen und kann mittels eines einfachen Auswerteverfahrens feststellen, ob das empfangene Paket ein unaufgefordert empfangenes Antwortpaket ist.

Gemäß einer Ausführungsform des Überwachungsservers ist dem Überwachungsserver eine Mehrzahl von unterschiedlichen Antwortnetzwerkadressen zugeordnet oder der Überwachungsserver ist ausgebildet, eine Mehrzahl von unterschiedlichen Antwortnetzwerkadressen zu verwalten.

Der Vorteil eines solchen Überwachungsservers liegt darin, dass bei einer Mehrzahl von dem Überwachungsserver zugeordneten oder durch den Überwachungsserver verwalteten Netzwerkadressen die Wahrscheinlichkeit größer ist, ein mit gefälschter Quelladresse versehenes Paket zu empfangen, so dass die Detektion eines DoS Angriffs schneller erfolgen kann.

Gemäß einer Ausführungsform des Überwachungsservers ist die Empfangsschnittstelle ausgebildet, eine Mehrzahl von Datenpaketen zu empfangen, welche von dem Zielserver stammen; und ist der Prozessor ausgebildet, eine Anzahl von Antwortpaketen in der Mehrzahl der Datenpakete zu erfassen, welche durch den Überwachungsserver unaufgefordert empfangen wurden, wobei der Prozessor ferner ausgebildet ist, ein Warnsignal auszugeben, falls die Anzahl der erfassten Antwortpakete einen vorgegebenen Schwellwert erreicht oder überschreitet.

Der Vorteil eines solchen Überwachungsservers liegt darin, dass die Zuverlässigkeit der Detektion eines DoS Angriffs höher ist, wenn eine Mehrzahl von empfangenen Datenpaketen zur Auswertung zur Verfügung steht.

Gemäß einer Ausführungsform des Überwachungsservers ist der Prozessor ausgebildet, zu bestimmen, ob das empfangene Antwortpaket auf eine durch den Überwachungsserver an den Zielserver ausgesendete Anfrage zurückzuführen ist; und das empfangene Antwortpaket als unaufgefordert empfangenes Antwortpaket zu kennzeichnen, falls das empfangene Antwortpaket nicht auf eine durch den Überwachungsserver an den Zielserver ausgesendete Anfrage zurückzuführen ist.

Der Vorteil eines solchen Überwachungsservers liegt darin, dass das Bestimmen, ob das empfangene Antwortpaket auf eine durch den Überwachungsserver an den Zielserver ausgesendete Anfrage zurückzuführen ist, einfach durchzuführen ist. Das Kennzeichnen kann der Überwachungsserver entweder durch Setzen eines Flags in dem empfangenen Paket machen, was den Vorteil hat, dass das Warnsignal über das Kommunikationsnetzwerk einfach und schnell verbreitet werden kann oder der Überwachungsserver kann das Kennzeichnen über das Versenden einer Nachricht in einem externen Netzwerk durchführen, was den Vorteil hat, dass das Kommunikationsnetzwerk, in dem der Angreifer agiert, nicht beeinflusst wird, so dass sich der Angreifer weiterhin sicher fühlt und damit leichter identifiziert werden kann.

Gemäß einer Ausführungsform des Überwachungsservers weist die Empfangsschnittstelle oder der Prozessor ein Paketfilter auf, das ausgebildet ist, Antwortpakete in den empfangenen Datenpaketen zu filtern, insbesondere ausschließlich Antwortpakete in den empfangenen Datenpaketen zu filtern.

Der Vorteil eines solchen Überwachungsservers liegt darin, dass die Antwortpakete durch das Paketfilter leicht erkannt werden können. Das Paketfilter kann leicht implementiert werden und erkennt Syn-Ack und andere Antwortnachrichten schnell. Dazu müssen nur die verschiedenen möglichen Übertragungsprotokolle erkannt werden, was meist durch Abfrage eines Datenfeldes im Header möglich ist und dann an durch das Protokoll vorgegebener Stelle geprüft werden, ob eine Bestätigung (Ack) oder eine Anfrage vorliegt.

Das Paketfilter kann beispielsweise auf heute üblichen Netzwerkprozessoren realisiert werden, z.B. als Mikrocoderealisierung.

Gemäß einer Ausführungsform des Überwachungsservers ist die Empfangsschnittstelle ausschließlich für den Empfang von Datenpaketen eingerichtet.

Der Vorteil eines solchen Überwachungsservers liegt darin, dass beim ausschließlichen Empfang von Datenpaketen die Detektion auf unaufgefordert empfangene Antwortpakete einfach zu realisieren ist. Entweder werden Anfragepakete empfangen oder es handelt sich um Antwortpakete, die dann unaufgefordert sind, da beim ausschließlichen Empfang von Datenpaketen kein vorheriges Absenden einer Anfrage durch den Überwachungsserver vorliegen kann. Ein solcher Überwachungsserver lässt sich besonders einfach und mit geringem Aufwand realisieren.

Weitere Ausführungsbeispiele werden Bezug nehmend auf die beiliegenden Zeichnungen erläutert. Es zeigen:
- Fig. 1: eine schematische Darstellung eines TCP Verbindungsaufbaus;
- Fig. 2: eine schematische Darstellung eines TCP Verbindungsaufbaus, der durch einen Denial-of-Service Angriff, hier durch TCP-SYN Flutung mit Quelladressfälschung, gestört wird;
- Fig. 3: eine schematische Darstellung eines Kommunikationsnetzwerks mit einem Überwachungsserver 103 zum Erkennen eines Denial-of-Service-Angriffs gemäß einer Ausführungsform;
- Fig. 4: eine schematische Darstellung eines im Überwachungsserver aus Fig. 3 ablaufenden Verfahrens um einen Denial-of-Service-Angriff zu detektieren, gemäß einer Ausführungsform;
- Fig. 5: eine schematische Darstellung eines Kommunikationsnetzwerks mit einem Überwachungsserver dem eine Mehrzahl von Netzwerkadressen bzw. Sub-Überwachungsserver zugeordnet sind zum Erkennen eines Denial-of-Service Angriff gemäß einer Ausführungsform;
- Fig. 6: eine schematische Darstellung eines im Überwachungsserver aus Fig. 5 ablaufenden Verfahrens, um einen Denial-of-Service-Angriff zu detektieren, gemäß einer Ausführungsform;
- Fig. 7: eine schematische Darstellung eines Überwachungsservers zum Erkennen eines Denial-of-Service-Angriffs gemäß einer Ausführungsform; und
- Fig. 8: eine schematische Darstellung eines Verfahrens 800 zum Erkennen eines Denial-of-Service-Angriffs gemäß einer Ausführungsform.

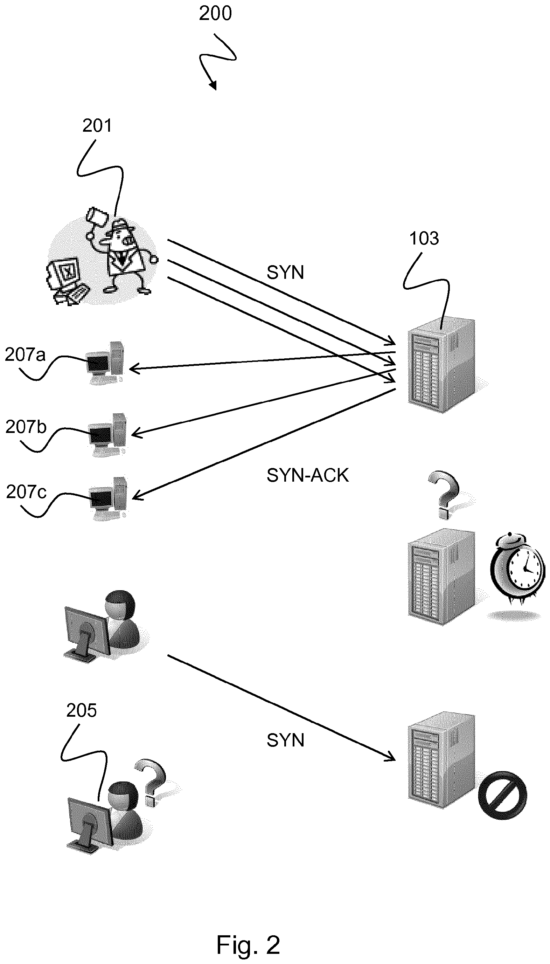

Fig. 2 zeigt einen SYN-Flooding ("Flutung") Angriff auf ein Computersystem. Der Angriff nutzt den Verbindungsaufbau des TCP-Transportprotokolls wie in Fig. 1 gezeigt, um einzelne Dienste oder ganze Computer aus dem Netzwerk lahmzulegen bzw. unerreichbar zu machen. Ein bösartiger Server oder Angreifer 201 erstellt hier SYN Pakete, bei denen die Quelladresse nicht seine eigene ist. Stattdessen fälscht er die Quelladresse so, dass die Quelladressen anderer im Internet vorhandener Clients 207a, 207b, 207c in die gesendeten SYN Pakete eingetragen werden. Der Server 203 antwortet dann mit SYN-ACK Paketen auf die SYN Anfragen, wobei diese SYN-ACK Pakete nun an die Clients 207a, 207b, 207c geschickt werden. Diese Clients 207a, 207b, 207c erhalten somit SYN-ACK Antwortpakete bezüglich derer sie keine Anfrage geschickt haben. Die SYN-ACK Pakete werden daher als unaufgefordert erhalten betrachtet und nicht weiterverarbeitet, so dass keine ACK Antworten an den Server 103 generiert werden. Der Server 103 wartet einige Zeit auf ein entsprechendes Paket, da es ja auch aufgrund von Verzögerungen verspätet eintreffen könnte. Während dieser Zeit werden sowohl die (gefälschten) Adressen der Clients 207a, 207b, 207c als auch der Status der noch halb offenen Verbindung im Speicher des Netzwerkstacks des Servers 103 vorrätig gehalten, um die Verbindung später vollständig etablieren zu können. Bei allen Betriebssystemen belegt diese so genannte halb offene Verbindung Ressourcen auf dem Server 103. Da Ressourcen immer begrenzt sind, ist es durch "Flutung" des Servers 103 mit SYN-Nachrichten möglich, alle diese Ressourcen aufzubrauchen. Sobald dies der Fall ist, können zum Server 103 keine neuen Verbindungen mehr aufgebaut werden, was zur Zugriffsverweigerung (Denial of Service) führt. Die Anfrage eines weiteren Clients 205 wird nicht beantwortet. Die Tatsache, dass SYN-Pakete sehr klein sind und auch ohne großen Rechenaufwand erzeugt werden können, macht diesen Angriff besonders effektiv. Der Verteidiger benötigt mehr Ressourcen zur Abwehr als der Angreifer für den Angriff selbst. Durch die gefälschte Quelladresse des bösartigen Servers oder Clients 201 kann der Server 103 den Angriff nicht zurückverfolgen. Der Server 103 geht davon aus, dass es sich um korrekte Anfragen der Clients 207a, 207b, 207c handelt.

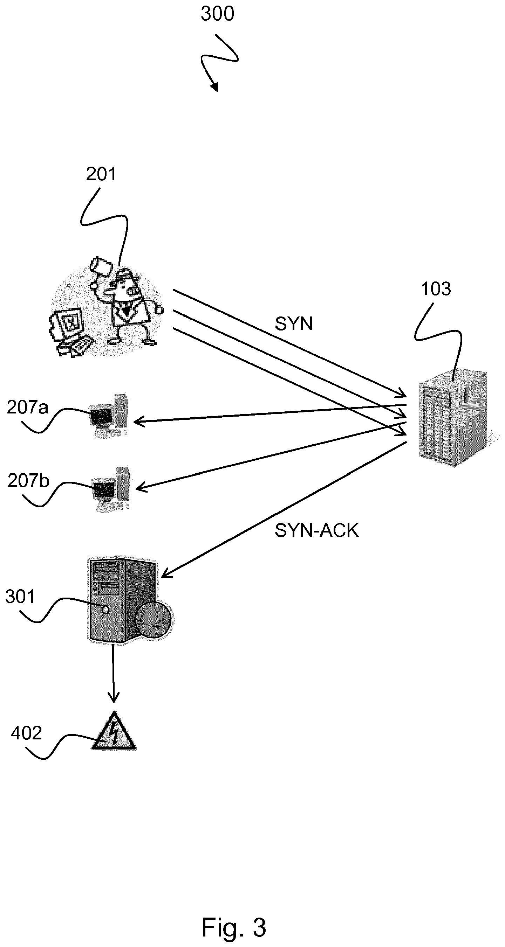

Fig. 3 zeigt eine schematische Darstellung eines Kommunikationsnetzwerks 300 mit einem Überwachungsserver 103 zum Erkennen eines Denial-of-Service-Angriffs gemäß einer Ausführungsform. Der Angriff ist der gleiche wie bereits oben zu Fig. 2 beschrieben, d.h. ein bösartiger Angreifer 201, beispielsweise ein Server oder ein Client, insbesondere ein Client in einem Bot-Netz, erstellt SYN Pakete, bei denen die Quelladresse nicht seine eigene ist und sendet eine Vielzahl solcher Pakete an den Server 103 im Kommunikationsnetzwerk 300 mit der Absicht, diesen lahmzulegen. Dabei gibt der Angreifer 201 nicht jedes Mal die gleiche Quelladresse an sondern verwendet verschiedene Quelladressen, die einer Vielzahl von Clients 207a, 207b, 301 zugeordnet sind, um so ein hohes Datenaufkommen vorzutäuschen. Einer der Clients 207a, 207b, 301 im Kommunikationsnetzwerk 300 ist eine Überwachungsserver 301, der in der Lage ist zu erkennen, ob das ihm zugesendete SYN-ACK Paket ein unaufgefordert empfangenes Antwortpaket ist. Dazu kann der Überwachungsserver 301 mit einem Speicher ausgestattet sein, in dem zuvor abgesandte Anforderungsnachrichten bzw. - pakete zwischengespeichert werden, um bei Eintreffen einer Bestätigungsnachricht bzw. eines Antwortpakets den Speicher auf die zugehörige Anforderungsnachricht hin abzufragen. Ein solcher Speicher kann beispielsweise der Speicher des Netzwerkstacks sein, in dem offene Anfragen gespeichert werden. Liegt zu einer Bestätigung keine zugehörige Anforderung im Speicher vor, so handelt es sich um eine unaufgefordert empfangene Bestätigungsnachricht. Der Überwachungsserver 301 kann beim Empfang einer solch unaufgefordert empfangenen Bestätigungsnachricht einen DoS Angriff detektieren und notfalls einen Alarm auslösen.

Im Einzelnen ist der Überwachungsserver 301 dazu eingerichtet, um einen Denial-of-Service-Angriffs in einem Kommunikationsnetzwerk 300 zu erkennen, in dem ein Angreifer 201 mit einer Quellnetzwerkadresse eine Anfrage, z.B. ein SYN Paket, mit einer Antwortnetzwerkadresse an einen Zielserver 103 sendet, um von dem Zielserver 103 eine Übersendung eines Antwortpaketes, z.B. ein SYN-ACK Paket, an die Antwortnetzwerkadresse, z.B. eine der Adressen der Clients 207a, 207b, 301 anzufordern, wobei die Antwortnetzwerkadresse sich von der Quellnetzwerkadresse des Angreifers 201 unterscheidet. Der Zielserver 103 sendet dann ansprechend auf den Empfang der Anfrage (z.B. SYN) ein Antwortpaket (z.B. SYN-ACK) an die Antwortnetzwerkadresse, also beispielsweise an die Adressen der Clients 207a, 207b, 301. Hierbei ist dem Überwachungsserver 301 zumindest eine Antwortnetzwerkadresse zugeordnet. Der Überwachungsserver 301 ist in der Lage, ein von dem Zielserver 103 stammendes Datenpaket (z.B. SYN-ACK) an eine Antwortadresse des Überwachungsservers 301 zu empfangen und einen Alarm oder ein Warnsignal auszugeben, falls das empfangene Datenpaket (SYN-ACK) ein durch den Überwachungsserver 301 unaufgefordert empfangenes Antwortpaket (SYN-ACK) ist.

Ein empfangenes Datenpaket (SYN-ACK) kann ein unaufgefordert empfangenes Antwortpaket sein, wenn das empfangene Antwortpaket (SYN-ACK) nicht auf eine durch den Überwachungsserver 301 an den Zielserver 103 ausgesendete Anfrage zurückzuführen ist und/oder wenn das empfangene Antwortpaket SYN-ACK von dem Zielserver 103 stammt.

Der Überwachungsserver 301 kann im Falle, dass es sich bei dem empfangenen Paket um ein unaufgefordert empfangenes Antwortpaket (SYN-ACK) handelt, beispielsweise aus dem empfangenen Datenpaket eine Zielnetzwerkadresse des Zielservers 103 extrahieren und diese durch das Warnsignal anzeigen lassen. Das Warnsignal kann angezeigt werden, um diesem das Vorliegen eines Denial-of-Service Angriffs anzuzeigen. Außerdem kann das Warnsignal auch an eine spezielle Netzwerküberwachungseinrichtung, beispielsweise durch einen weiteren Server weitergeleitet werden, um der Netzwerküberwachungseinrichtung das Vorliegen eines DoS Angriffs anzuzeigen. In diesem Fall kann der Überwachungsserver 301 verborgen operieren, d.h. er wird nicht enttarnt.

Auch wenn in Fig. 3 das Verfahren zum TCP Verbindungsaufbau dargestellt ist, muss es sich bei den empfangenen Antwortpaketen nicht ausschließlich um TCP-ACK Pakete handeln. Der Überwachungsserver 301 kann auch andere Antwortpakete erhalten und darauf basierend einen DoS Angriff erkennen, beispielsweise ein ICMP-Echo Datenpaket, insbesondere ein ICMP-Datenpaket des Typs Echo Reply, das bei einer Ping Anfrage üblicherweise als Antwort gesendet wird, ein DNS-Datenpaket, ein User-Datagram-Protocol (UDP) Datenpaket oder Antwortpakete anderer Datenprotokolle.

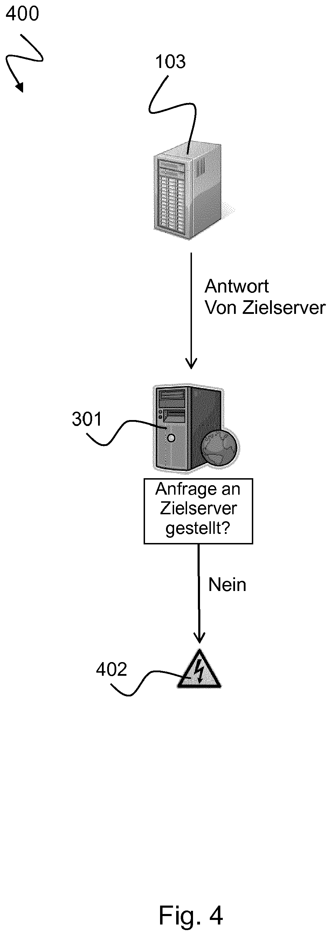

Fig. 4 zeigt eine schematische Darstellung eines im Überwachungsserver aus Fig. 3 ablaufenden Verfahrens 400 um einen Denial-of-Service-Angriff zu detektieren, gemäß einer Ausführungsform.

Bei Eintreffen einer Bestätigungsnachricht vom Zielserver 103 prüft der Überwachungsserver 301, ob die Nachricht eine Antwort auf eine von ihm zuvor gestellte Anfrage an den Zielserver 103 ist. Ist dies nicht der Fall, so handelt es sich höchstwahrscheinlich um einen Denial-of-Service Angriff. Der Überwachungsserver 301 erzeugt einen Alarm 402 oder eine Warnmeldung.

Beim Beispiel einer TCP Übertragung besteht das TCP-Segment aus zwei Teilen, dem Header (Datenkopf) und der Nutzlast, auch payload genannt. Die Nutzlast enthält die zu übertragenden Daten und der Header enthält für die Kommunikation erforderliche Daten sowie die Dateiformat-beschreibende Information. Ein typischer Header kann eine Größe von 20 Byte haben. Der TCP-Header umfasst ein 2 Byte großes Feld, das den Quellport auf Senderseite angibt, ein 2 Byte großes Feld, das den Zielport auf Empfängerseite angibt, ein 4 Byte großes Feld, das die Sequenznummer dieses TCP-Pakets oder die Initialisierungs-Sequenznummerfalls das SYN-Flag gesetzt ist, angibt, ein 4 Byte großes Feld, das die Quittungsnummer angibt, d.h. die Sequenznummer, die der Empfänger dieses TCP-Segmentes als Nächstes erwartet und ein Control-Flags Feld der Größe 6 Bit, das genutzt wird, um bestimmte für die Kommunikation und Weiterverarbeitung der Daten wichtige Zustände zu kennzeichnen. Für den Verbindungsaufbau von Bedeutung sind das ACK Flag, das SYN Flag und das RST Flag. Das ACK Flag, auch als Acknowledgment-Flag bzw. Bestätigungs-Flag bezeichnet, hat in Verbindung mit der Acknowledgment-Nummer die Aufgabe, den Empfang von TCP-Segmenten beim Datentransfer zu bestätigen. Die Acknowledgment-Nummer ist nur gültig, wenn das Flag gesetzt ist. Das SYN Flag dient dazu, eine Verbindung zu initiieren. Pakete mit gesetztem SYN-Flag initiieren eine Verbindung. Der Server antwortet normalerweise entweder mit SYN+ACK, wenn er bereit ist, die Verbindung anzunehmen, andernfalls mit RST. Das SYN Flag dient der Synchronisation von Sequenznummern beim Verbindungsaufbau. Das RST Flag, auch Reset-Flag bezeichnet, wird verwendet, wenn eine Verbindung abgebrochen werden soll. Dies geschieht zum Beispiel bei technischen Problemen oder zur Abweisung unerwünschter Verbindungen wie etwa nicht geöffneten Ports.

Der Überwachungsserver 301 kann beim Empfang eines TCP Pakets beispielsweise den TCP Header lesen und dort das ACK-Flag und das SYN-Flag abfragen. Sind diese beiden Flags gesetzt, so handelt es sich um eine Bestätigung auf eine vorangegangene Anfrage. Der Überwachungsserver 301 kann dann in seinem Speicher nachsehen, ob ein zugehöriges TCP Anfragepaket vorhanden ist, d.h. ein TCP Paket mit gesetztem SYN-Flag, dessen Quittungsnummer, d.h. dessen Sequenznummer, die der Empfänger als Nächstes erwartet, mit der Sequenznummer in dem empfangenen TCP Anfragepaket übereinstimmt. Falls keine Übereinstimmung besteht, kann der Überwachungsserver 301 eine Warnmeldung 402 erzeugen. Ein solcher Speicher kann beispielsweise der Speicher des Netzwerkstacks sein, in dem offene Anfragen gespeichert werden.

In einer Ausführungsform kann der Überwachungsserver 301 neben der Warnmeldung 402 auch zusätzlich eine Antwort an den Zielserver 103 schicken, um diesem anzuzeigen, dass ein Denial-of-Service Angriff erkannt wurde. Der Überwachungsserver 301 kann auch auf das Antwortpaket eine Antwort senden, beispielsweise ein TCP Paket, bei dem das RST Flag gesetzt ist, um dem Zielserver zu signalisieren, dass er die Verbindung abbrechen soll. Diese Antwort kann beispielsweise ein vordefiniertes Flag enthalten, die dem Zielserver 103 mitteilt, dass der Verbindungsabbruch aufgrund von DoS Angriff erfolgt.

Beim Beispiel einer Ping Anfrage, die mit dem ICMP Protokoll ausgeführt wird, besteht das ICMP-Segment aus einem Header (Datenkopf) und den Daten. Der Header besteht aus einem Typ-Datenfeld, einem Code-Datenfeld und einem Prüfsummen-Datenfeld. Beim einer Echo Anfrage ("Ping") enthält das Typ-Datenfeld eine 8, während es bei der Echo Antwort eine 0 aufweist. Auf die Anfrage mit einem ICMP-"Echo-Request"-Paket (ping, ICMP-Paket-Typ 8 (0x08)) an die Zieladresse des zu überprüfenden Hosts muss der Empfänger, sofern er das Protokoll unterstützt mit einem ICMP "Echo-Reply" Paket (pong, ICMP-Paket-Typ 0 (0x00)) antworten.

Der Überwachungsserver 301 kann beim Empfang eines ICMP Datenpakets beispielsweise den ICMP Header lesen und dort das Typ-Datenfeld abfragen. Ist dieses auf 0 gesetzt, so handelt es sich um ein ICMP Echo Reply Paket, d.h. eine Bestätigung (Pong) auf eine vorangegangene Anfrage. Der Überwachungsserver 301 kann dann in seinem Speicher nachsehen, ob ein zugehöriges ICMP Anfragepaket (Ping) vorhanden ist, d.h. ein ICMP Paket mit dem Paket-Typ 0x08. Ein solcher Speicher kann beispielsweise der Speicher des Netzwerkstacks sein, in dem offene Anfragen gespeichert werden. Falls kein solches Anfragepaket vorhanden ist, kann der Überwachungsserver 301 eine Warnmeldung 402 erzeugen.
Neben der Warnmeldung kann der Überwachungsserver 301 auch zusätzlich eine Meldung an den Zielserver 103 schicken, um diesem anzuzeigen, dass ein Denial-of-Service Angriff erkannt wurde.

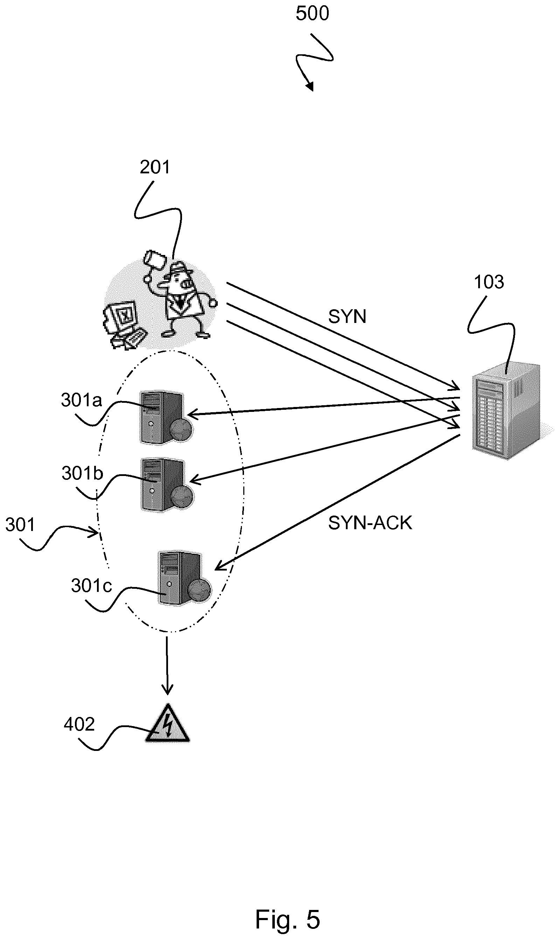

Fig. 5 zeigt eine schematische Darstellung eines Kommunikationsnetzwerks 500 mit einem Überwachungsserver 301 dem eine Mehrzahl von Netzwerkadressen zugeordnet sind, zum Erkennen eines Denial-of-Service-Angriffs gemäß einer Ausführungsform.

Die Erkennung des Denial-of-Service Angriffs passiert auf die gleiche Weise wie bereits oben in Fig. 3 und Fig. 4 beschrieben. Der Überwachungsserver 301 kann jedoch eine Mehrzahl von Netzwerkadressen aufweisen, so dass er eine Mehrzahl von Clients simuliert. Ein Überwachungsserver 301 dem eine Vielzahl von Adressen zugeordnet sind entspricht damit einem Kommunikationsnetzwerk mit einer Vielzahl von Überwachungsservern 301 a, 301 b, 301 c, denen jeweils (unterschiedliche) Adressen zugeordnet sind, wie in Fig. 5 dargestellt. Sendet der Angreifer 201 Anfragepakete mit gefälschten Quelladressen, so erhöht sich die Detektionswahrscheinlichkeit, wenn der Überwachungsserver aus einem Pool von Netzwerkadressen oder IP-Adressen Anfragen empfangen kann. Die Antworten auf die Anfragen mit den vom Angreifer 201 erzeugten gefälschten Quelladressen, werden wenn es sich um zufällig erzeugte Netzwerkadressen oder IP-Adressen handelt, mit hoher Wahrscheinlichkeit an eine der im Adresspool des Überwachungsservers 301 vorhandenen Netzwerkadressen gerichtet sein, wenn der Adresspool des Überwachungsservers 301 sehr groß ist, beispielsweise die Größe eines Klasse C, Klasse B oder sogar Klasse A Netzwerks hat.

Der Überwachungsserver 301, dem eine Mehrzahl von unterschiedlichen Antwortnetzwerkadressen zugeordnet ist, kann die Mehrzahl der unterschiedlichen Antwortnetzwerkadressen überwachen, um den Empfang eines unaufgefordert empfangenen Datenpaketes zu detektieren. Dazu kann der Überwachungsserver 301 wie folgt vorgehen. Zuerst kann eine Datenpaket oder die Mehrzahl von Datenpaketen empfangen welche durch den Zielserver 103 an Antwortnetzwerkadressen ausgesendet wurden, welche dem Überwachungsserver 301 zugeordnet sind. Danach kann er die Anzahl von Antwortpaketen in der Mehrzahl der Datenpakete erfassen, welche unaufgefordert empfangen wurden. Schließlich kann er ein Warnsignal ausgeben, falls die Anzahl der erfassten Antwortpakete einen vorgegebenen Schwellwert erreicht oder überschreitet. Dies berücksichtigt, dass es sich beim Empfang von unaufgeforderten Antwortpaketen auch um zufällige Pakete handeln kann oder um Pakete, deren Daten beim Übertragen über den Kanal in zufälliger Weise verfälscht wurden. Ein Aussenden eines Alarms kann dann beispielsweise erst dann erfolgen, wenn anhand einer vorgegebenen Anzahl von unaufgefordert empfangenen Paketen mit einer gewissen Sicherheit auf einen DoS Angriff geschlossen werden kann. Dies erhöht die Zuverlässigkeit der Erkennung und vermeidet etwaige Fehlalarme.

Ein durch den Überwachungsserver 301 empfangenes Datenpaket kann beispielsweise dann als unaufgefordert empfangenes Antwortpaket gelten, wenn das empfangene Antwortpaket nicht auf eine durch den Überwachungsserver an den Zielserver ausgesendete Anfrage zurückzuführen ist oder wenn das empfangene Antwortpaket von dem Zielserver stammt.

In einer Ausführungsform ist der Überwachungsserver 301 zwischen den Zielserver 103 und einem oder mehreren der Clients 207a, 207b aus der Darstellung der Figur 3 lokalisiert, so dass er Anforderungs- und Bestätigungsnachrichten an die Clients 207a, 207b lesen kann und darauf basierend feststellen kann, ob eine Bestätigung auf eine Anfrage des jeweiligen Clients hin erfolgt ist oder nicht. Falls nicht, so handelt es sich um einen unaufgeforderte Bestätigungsnachricht. In einer Ausführungsform überwacht der Überwachungsserver 301 die Kommunikation zwischen dem Zielserver 103 und einer Vielzahl von Clients 207a, 207b, um unaufgeforderte Bestätigungsnachrichten zu detektieren. Der Überwachungsserver 301 braucht dazu die Nachrichten nur mithören ohne einen Einfluss auf die Netzwerkverbindungen auszuüben.

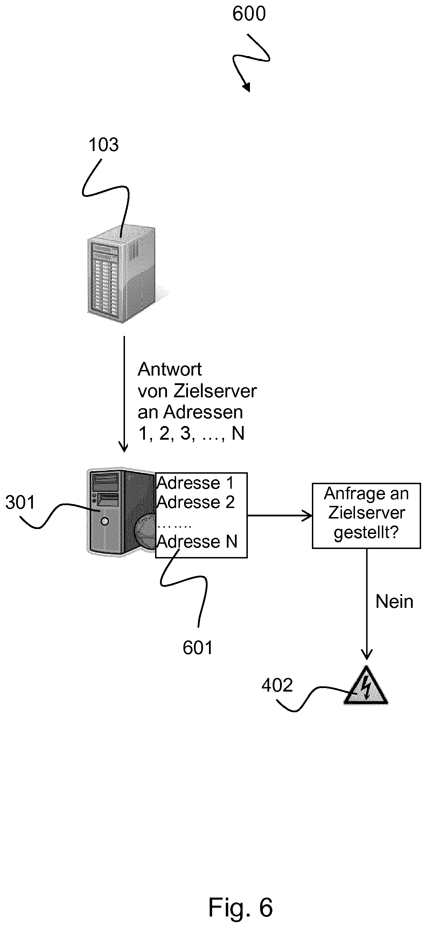

Fig. 6 zeigt eine schematische Darstellung eines im Überwachungsserver aus Fig. 5 ablaufenden Verfahrens 600 um einen Denial-of-Service-Angriff zu detektieren, gemäß einer Ausführungsform.

Wie schon zuvor in Bezug auf Fig. 4 beschrieben prüft der Überwachungsserver 301 bei Eintreffen einer Bestätigungsnachricht vom Zielserver 103, ob die Nachricht eine Antwort auf eine von ihm zuvor gestellte Anfrage an den Zielserver 103 ist. Ist dies nicht der Fall, so handelt es sich höchstwahrscheinlich um einen Denial-of-Service Angriff. Der Überwachungsserver 301 erzeugt einen Alarm 402 oder eine Warnmeldung. Diesen Mechanismus führt der Überwachungsserver 301 für sämtliche Adressen, die ihm zugeordnet sind, d.h. den gesamten Adresspool 601 der in Fig. 6 dargestellten Adressen 1 bis N, aus. Ist der Adressraum des Adresspools 601 groß, so ist die Wahrscheinlichkeit, dass eine der gefälschten Quelladressen des DoS Angriffs eine der Adressen aus dem Adresspool 601 des Überwachungsservers 301 ist.

Der Überwachungsservers 301 kann für jedes empfangene Paket einer der ihm zugeordneten Adressen bestimmen, ob das empfangene Antwortpaket auf eine durch den Überwachungsserver an den Zielserver ausgesendete Anfrage zurückzuführen ist und das empfangene Antwortpaket als unaufgefordert empfangenes Antwortpaket kennzeichnen, falls das empfangene Antwortpaket nicht auf eine durch den Überwachungsserver an den Zielserver ausgesendete Anfrage zurückzuführen ist. Der Überwachungsservers 301 kann ein Paketfilter aufweisen, um die empfangenen Pakete zu filtern, beispielsweise kann der Paketfilter nur empfangene Antwortpakete zur Weiterverarbeitung passieren lassen und sonstige Pakete, die keine Antwortpakete sind, verwerfen. Damit wird eine schnellere Verarbeitung durch den Überwachungsserver gewährleistet, denn anhand der Antwortpakete kann der Überwachungsserver feststellen, ob die Bestätigung angefordert wurde oder unaufgefordert gesendet wurde. Ein solcher Paketfilter kann beispielsweise in einer ersten Stufe nur den Paketheader (Paketkopf) zur Weiterverarbeitung passieren lassen und in einer zweiten Stufe in dem Paketheader nach einem Bestätigungs-Flag suchen, um ein empfangenes Paket als Antwortpaket zu detektieren.

Beispielsweise kann das Paketfilter bei einem TCP Datenpaket den TCP-Header in der ersten Stufe erkennen und weiterleiten, woraufhin in der zweiten Stufe in dem TCP-Header das SYN-Flag und das ACK-Flag detektiert wird, welche jeweils an der gleichen Position im TCP-Header zu finden sind. Sind beide Flags gesetzt, so handelt es sich um ein SYN-ACK Antwortpaket, das mit einem im Speicher vorhandenen Anfragepaket vergleichen werden kann, wie oben in Fig. 4 beschrieben, um ein unaufgefordertes Antwortpaket zu detektieren bzw. herauszufiltern. Beide Stufen des Paketfilters können aber auch als eine einzige Filteroperation ausgeführt werden, so dass das Paketfilter bei erkanntem Typ des Datenpakets (beispielsweise TCP) gleich die Bestätigungs-Flags (SYN-Flag und ACK-Flag) an der vorbestimmten Stelle herausfiltert.

Bei einem IGMP Datenpaket kann das Paketfilter beispielsweise in einer ersten Stufe den IGMP Header herausfiltern und in einer zweiten Stufe das Typ-Datenfeld, d.h. den Paket-Typ auslesen, um bei einem ICMP Paket-Typ von 0x00 ein ICMP Echo Reply Paket zu detektieren, also ein Antwortpaket und dieses dann mit einem im Speicher vorhandenen ICMP Echo Request Paket mit Paket-Typ 0x08 vergleichen, um ein unaufgefordertes ICMP Echo Reply Paket (Pong) zu detektieren bzw. herauszufiltern. Ein solcher Speicher kann beispielsweise der Speicher des Netzwerkstacks sein, in dem offene Anfragen gespeichert werden. Beide Stufen des Paketfilters können auch hier als eine einzige Filteroperation ausgeführt werden, so dass das Paketfilter bei erkanntem Typ des Datenpakets (beispielsweise ICMP Echo) gleich den Paket-Typ an der vorbestimmten Stelle herausfiltern kann.

Bei einem DNS Datenpaket kann das Paketfilter beispielsweise ein DNS Response Paket herausfiltern. Bei der rekursiven DNS Abfrage übergibt der bösartige Client die Namensauflösung an einen DNS-Server mittels eines DNS Request Pakets mit gefälschter Quelladresse. Wenn dieser den Domain-Namen nicht auflösen kann, fragt der DNS-Server bei weiteren DNS-Servern nach, bis der Domain-Name aufgelöst ist und die Antwort vom DNS-Server an den gefälschten Client zurückgeliefert werden kann. Handelt es sich bei dem gefälschten Client um den Überwachungsserver 301, so erhält dieser das DNS Response Paket, das durch das Paketfilter herausgefiltert werden kann, um einen DoS Angriff festzustellen. Bei der iterativen Abfrage liefert der DNS-Server nur die Adresse des nächsten abzufragenden DNS-Servers zurück. Das Paketfilter des Überwachungsservers 301 ist in der Lage, das empfangene Datenpaket zu filtern, so dass der Überwachungsserver 301 anhand des empfangenen DNS Pakets mit der gelieferten Adresse des nächsten DNS-Servers erkennen kann, ob das empfangene DNS Paket ein unaufgefordert gesendetes DNS Paket ist, um einen DoS Angriff zu detektieren.

In ähnlicher Weise kann das Paketfilter ein HTTP Response Datenpaket herausfiltern und der Überwachungsserver 301 kann prüfen, ob es einem zuvor gesendeten HTTP Request Datenpaket zugeordnet werden kann. Das Paketfilter kann auch ein SNMP Get Response Datenpaket herausfiltern und der Überwachungsserver 301 kann prüfen, ob es einem zuvor gesendeten SNMP Get Request Datenpaket zugeordnet werden kann. Ebenfalls bei IMAP Anfragen, SMTP Anfragen und anderen Abfrageprotokollen kann ein DoS Angriff in gleicher Weise durch den Überwachungsserver 301 erkannt werden.

Der Überwachungsserver 301 kann beispielsweise mit einer Empfangsschnittstelle Datenpakete empfangen, wobei die Empfangsschnittstelle ausschließlich für den Empfang von Datenpaketen eingerichtet sein kann. Wenn der Überwachungsserver 301 nur Datenpakete empfängt, aber keine Antworten auf empfangene Datenpakete zurücksendet, kann er auch nicht enttarnt werden, da er dann lediglich den Datenverkehr beobachtet ohne ihn zu beeinflussen. Ohne eine Beeinflussung des Datenverkehrs ist es nicht leicht, seine Anwesenheit festzustellen, insbesondere nicht von einem Angreifer im Netz.

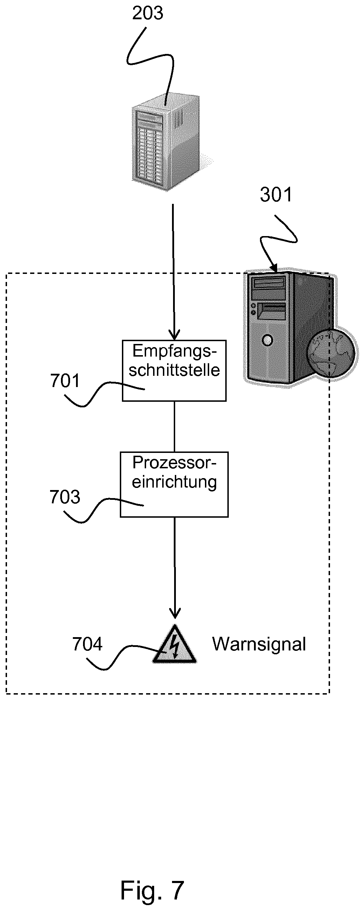

Fig. 7 zeigt eine schematische Darstellung eines Überwachungsservers 301 zum Erkennen eines Denial-of-Service-Angriffs in einem Kommunikationsnetzwerk gemäß einer Ausführungsform. Ein Angreifer (nicht dargestellt) mit einer Quellnetzwerkadresse sendet eine Anfrage mit einer Antwortnetzwerkadresse an den Zielserver 203, um von dem Zielserver 203 eine Übersendung eines Antwortpaketes an die Antwortnetzwerkadresse anzufordern. Die Antwortnetzwerkadresse kann sich von der Quellnetzwerkadresse des Angreifers unterscheiden. Der Zielserver sendet ansprechend auf den Empfang der Anfrage ein Antwortpaket an die Antwortnetzwerkadresse. Dabei ist dem Überwachungsserver 301 zumindest eine Antwortnetzwerkadresse zugeordnet. Der Überwachungsserver 301 umfasst eine Empfangsschnittstelle 701 zum Empfangen eines von dem Zielserver 203 stammenden Datenpaketes an eine Antwortadresse des Überwachungsservers 301. Der Überwachungsserver 301 umfasst ferner eine Prozessoreinrichtung 703 auf, welche ausgebildet ist, ein Warnsignal 704 auszugeben, falls das empfangene Datenpaket ein durch den Überwachungsserver 301 unaufgefordert empfangenes Antwortpaket ist.

Dem Überwachungsserver 301 kann eine Mehrzahl von unterschiedlichen Antwortnetzwerkadressen zugeordnet sein, beispielsweise wie oben in Bezug auf die Figuren 5 und 6 beschrieben. Der Überwachungsserver 301 kann alternativ oder zusätzlich eine Mehrzahl von unterschiedlichen Antwortnetzwerkadressen verwalten.

Die Empfangsschnittstelle 701 kann eine Mehrzahl von Datenpaketen empfangen, welche von dem Zielserver 203 stammen. Der Prozessor bzw. die Prozessoreinrichtung 703 kann eine Anzahl von Antwortpaketen in der Mehrzahl der Datenpakete erfassen, welche durch den Überwachungsserver 301 unaufgefordert empfangen wurden. Der Prozessor 703 kann ferner ein Warnsignal ausgeben, falls die Anzahl der erfassten Antwortpakete einen vorgegebenen Schwellwert erreicht oder überschreitet.

Der Prozessor 703 kann bestimmen, ob das empfangene Antwortpaket auf eine durch den Überwachungsserver 301 an den Zielserver 203 ausgesendete Anfrage zurückzuführen ist; und das empfangene Antwortpaket als unaufgefordert empfangenes Antwortpaket kennzeichnen, falls das empfangene Antwortpaket nicht auf eine durch den Überwachungsserver 301 an den Zielserver 203 ausgesendete Anfrage zurückzuführen ist.

Die Empfangsschnittstelle 701 und/oder der Prozessor 703 können ein Paketfilter aufweisen, das Antwortpakete in den empfangenen Datenpaketen filtern kann, insbesondere ausschließlich Antwortpakete in den empfangenen Datenpaketen, um die Antwortpakete zu erkennen, beispielsweise SYN-ACK, ICMP Echo Reply, oder andere Bestätigungen. Die Empfangsschnittstelle 701 kann ausschließlich für den Empfang von Datenpaketen eingerichtet sein.

Gemäß einer Ausführungsform können die Empfangsschnittstelle 701 und/oder der Prozessor 703 auf verschiedenen Geräten/Servern abgebildet sein. Durch eine Zusammenführung und Auswertung von verschiedenen Empfangsschnittstellen auf einem Analyserechner sind Korrelationen möglich, die weitere Rückschlüsse auf die Angriffsmethodik oder den Angreifer ermöglichen. Gemäß einer Ausführungsform können hierzu mehrere Ebenen etabliert werden: Sensoren -> Aggregator(en) -> Normalisator(en) -> Datenbank(en) -> Analysator(en).

Der Prozessor 703 kann beispielsweise als Hardwareschaltung realisiert sein, beispielsweise als ein Controller oder ein DSP oder ein ASIC oder ein FPGA. Der Prozessor kann auf einem Chip oder einem integrierten Schaltkreis bzw. IC implementiert sein. Die Empfangsschnittstelle 701 kann ein Speicher oder Register sein, in dem von einem A/D Wandler empfangene Datenworte abgelegt werden.

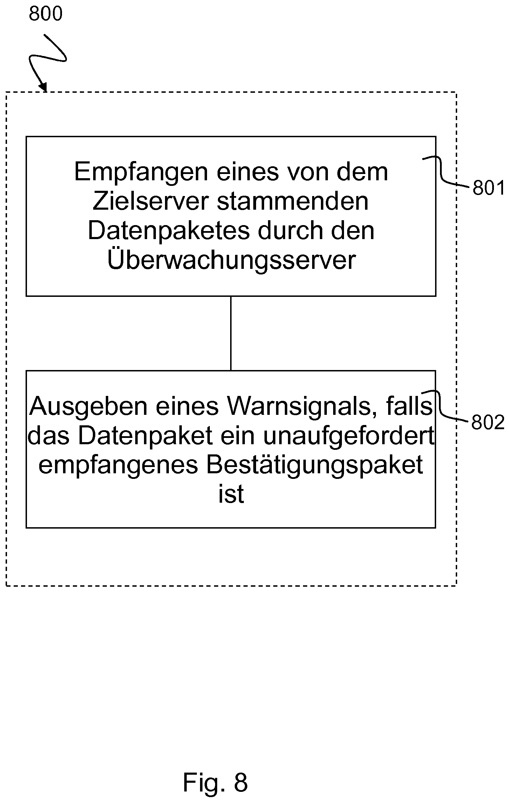

Fig. 8 zeigt eine schematische Darstellung eines Verfahrens 800 zum Erkennen eines Denial-of-Service-Angriffs gemäß einer Ausführungsform. Das Verfahren 800 eignet sich dazu, einen Denial-of-Service-Angriff in einem Kommunikationsnetzwerk zu erkennen, in dem ein Angreifer mit einer Quellnetzwerkadresse eine Anfrage mit einer Antwortnetzwerkadresse an einen Zielserver sendet, um von dem Zielserver eine Übersendung eines Antwortpaketes an die Antwortnetzwerkadresse anzufordern, wobei die Antwortnetzwerkadresse sich von der Quellnetzwerkadresse des Angreifers unterscheidet, und wobei der Zielserver ansprechend auf den Empfang der Anfrage ein Antwortpaket an die Antwortnetzwerkadresse sendet. Das Verfahren 800 umfasst ein Empfangen 801 eines von dem Zielserver stammenden Datenpaketes durch einen Überwachungsserver, welchem die Antwortnetzwerkadresse zugeordnet ist; und ein Ausgeben 802 eines Warnsignals durch den Überwachungsserver, falls das empfangene Datenpaket ein durch den Überwachungsserver unaufgefordert empfangenes Antwortpaket ist.

In einer Ausführungsform des Verfahrens 800 wird aus dem empfangenen Datenpaket eine Zielnetzwerkadresse des Zielservers extrahiert und durch das Warnsignal angezeigt. In einer Ausführungsform des Verfahrens 800 wird das Warnsignal über ein Kommunikationsnetzwerk an den Zielserver oder an eine Netzwerküberwachungsentität durch eine weitere Netzwerkentität, welche sich von dem Überwachungsserver unterscheidet, ausgesendet, um das Vorliegen eines Denial-of-Service-Angriffs anzuzeigen. Dadurch wird der Überwachungsserver nicht enttarnt. In einer Ausführungsform des Verfahrens 800 sind dem Überwachungsserver eine Mehrzahl von unterschiedlichen Antwortnetzwerkadressen zugeordnet, wobei die Mehrzahl der unterschiedlichen Antwortnetzwerkadressen durch den Überwachungsserver überwacht wird, um den Empfang des Datenpaketes zu detektieren.

In einer Ausführungsform umfasst das Verfahren 800 ein Empfangen einer Mehrzahl von Datenpaketen durch den Überwachungsserver, wobei die empfangenen Datenpakete durch den Zielserver an Antwortnetzwerkadressen ausgesendet wurden, welche dem Überwachungsserver zugeordnet sind; ein Erfassen einer Anzahl von Antwortpaketen in der Mehrzahl der Datenpakete, welche durch den Überwachungsserver unaufgefordert empfangen wurden; und ein Ausgeben des Warnsignals durch den Überwachungsserver, falls die Anzahl der erfassten Antwortpakete einen vorgegebenen Schwellwert erreicht oder überschreitet.

In einer Ausführungsform des Verfahrens 800 ist ein durch den Überwachungsserver empfangenes Datenpaket ein unaufgefordert empfangenes Antwortpaket, wenn das empfangene Antwortpaket nicht auf eine durch den Überwachungsserver an den Zielserver ausgesendete Anfrage zurückzuführen ist oder wenn das empfangene Antwortpaket von dem Zielserver stammt.

In einer Ausführungsform umfasst das Verfahren 800 ein Bestimmen, ob das empfangene Antwortpaket auf eine durch den Überwachungsserver an den Zielserver ausgesendete Anfrage zurückzuführen; und ein Kennzeichnen des empfangenen Antwortpaketes als unaufgefordert empfangenes Antwortpaket, falls das empfangene Antwortpaket nicht auf eine durch den Überwachungsserver an den Zielserver ausgesendete Anfrage zurückzuführen ist.

In einer Ausführungsform des Verfahrens 800 ist das empfangene Antwortpaket eines der folgenden Antwortpakete: eine Synchronisationsbestätigung SYN-ACK des TCP Übertragungssteuerungsprotokolls, wobei die Anfrage eine Synchronisationsanfrage SYN des TCP Übertragungssteuerungsprotokolls ist; ein ICMP-Echo-Datenpaket, insbesondere ein ICMP-Datenpaket des Typs Echo Reply; ein DNS-Datenpaket bzw. ein oder mehrere DNS-Antwortpakete als Untermenge von User-Datagram-Protocol-Datenpaketen; oder ein User-Datagram-Protocol-Datenpaket.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nich direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

## Patentansprüche

1. Verfahren (800) zum Erkennen eines Denial-of-Service-Angriffs, wobei das Verfahren (800) die folgenden Schritte umfasst:
Empfangen (801) eines von einem Zielserver (103) stammenden Datenpaketes durch einen Überwachungsserver (301), welchem eine Antwortnetzwerkadresse zugeordnet ist; und
Ausgeben (802) eines Warnsignals (402) durch den Überwachungsserver (301), falls das empfangene Datenpaket ein durch den Überwachungsserver (301) unaufgefordert empfangenes Antwortpaket ist.

2. Verfahren (800) nach Anspruch 1,
wobei der Denial-of-Service-Angriff in einem Kommunikationsnetzwerk (300, 500) erfolgt, in dem ein Angreifer (201) mit einer Quellnetzwerkadresse eine Anfrage mit der Antwortnetzwerkadresse an den Zielserver (103) sendet, um von dem Zielserver (103) eine Übersendung eines Antwortpaketes an die Antwortnetzwerkadresse anzufordern, wobei die Antwortnetzwerkadresse sich von der Quellnetzwerkadresse des Angreifers (201) unterscheidet, wobei der Zielserver (103) ansprechend auf den Empfang der Anfrage das Antwortpaket an die Antwortnetzwerkadresse sendet.

3. Verfahren (800) nach Anspruch 1 oder 2,
wobei aus dem empfangenen Datenpaket eine Zielnetzwerkadresse des Zielservers (103) extrahiert und durch das Warnsignal (402) angezeigt wird.

4. Verfahren (800) nach einem der vorstehenden Ansprüche,
wobei das Warnsignal (402) über ein Kommunikationsnetzwerk an den Zielserver (103) oder an eine Netzwerküberwachungsentität durch eine weitere Netzwerkentität, welche sich von dem Überwachungsserver (301) unterscheidet, ausgesendet wird, um das Vorliegen eines Denial-of-Service-Angriffs anzuzeigen.

5. Verfahren (800) nach einem der vorstehenden Ansprüche,
wobei dem Überwachungsserver (301) eine Mehrzahl von unterschiedlichen Antwortnetzwerkadressen zugeordnet ist, wobei die Mehrzahl der unterschiedlichen Antwortnetzwerkadressen durch den Überwachungsserver (301) überwacht wird, um den Empfang des Datenpaketes zu detektieren.

6. Verfahren (800) nach Anspruch 5, mit:
Empfangen einer Mehrzahl von Datenpaketen durch den Überwachungsserver (301), wobei die empfangenen Datenpakete durch den Zielserver (103) an Antwortnetzwerkadressen ausgesendet wurden, welche dem Überwachungsserver (301) zugeordnet sind;
Erfassen einer Anzahl von Antwortpaketen in der Mehrzahl der Datenpakete, welche durch den Überwachungsserver (301) unaufgefordert empfangen wurden; und
Ausgeben des Warnsignals (402) durch den Überwachungsserver (301), falls die Anzahl der erfassten Antwortpakete einen vorgegebenen Schwellwert erreicht oder überschreitet.

7. Verfahren (800) nach einem der vorstehenden Ansprüche,
wobei ein durch den Überwachungsserver (301) empfangenes Datenpaket ein unaufgefordert empfangenes Antwortpaket ist, wenn das empfangene Antwortpaket nicht auf eine durch den Überwachungsserver (301) an den Zielserver (103) ausgesendete Anfrage zurückzuführen ist oder wenn das empfangene Antwortpaket von dem Zielserver (103) stammt.

8. Verfahren (800) nach einem der vorstehenden Ansprüche, mit:
Bestimmen, ob das empfangene Antwortpaket auf eine durch den Überwachungsserver (301) an den Zielserver (103) ausgesendete Anfrage zurückzuführen ist; und
Kennzeichnen des empfangenen Antwortpaketes als unaufgefordert empfangenes Antwortpaket, falls das empfangene Antwortpaket nicht auf eine durch den Überwachungsserver (301) an den Zielserver (103) ausgesendete Anfrage zurückzuführen ist.

9. Verfahren (800) nach einem der vorstehenden Ansprüche,
wobei das empfangene Antwortpaket eines der folgenden Antwortpakete ist:
- eine Synchronisationsbestätigung SYN-ACK des TCP Übertragungssteuerungsprotokolls, wobei die Anfrage eine Synchronisationsanfrage SYN des TCP Übertragungssteuerungsprotokolls ist;
- ein ICMP-Echo-Datenpaket, insbesondere ein ICMP-Datenpaket des Typs Echo Reply;
- ein DNS-Datenpaket;
- ein RST-Paket; oder
- ein User-Datagram-Protocol-Datenpaket.

10. Kommunikationsnetzwerk (300), mit:
einem Zielserver (103), der ausgebildet ist, ansprechend auf einen Empfang einer Anfrage mit einer Antwortnetzwerkadresse eine Antwortpaket an die Antwortnetzwerkadresse zu senden; und
einem Überwachungsserver (301), dem die Antwortnetzwerkadresse zugeordnet ist, und der ausgebildet ist, ein von dem Zielserver (103) stammendes Datenpaket zu empfangen und ein Warnsignal auszugeben, falls das empfangene Datenpaket ein durch den Überwachungsserver (301) unaufgefordert empfangenes Antwortpaket ist.

11. Kommunikationsnetzwerk (300) nach Anspruch 10,
wobei der Überwachungsserver (301) mit einem Speicher ausgestattet ist, in dem zuvor abgesandte Anforderungsnachrichten zwischengespeichert werden, um bei Eintreffen eines Antwortpakets den Speicher auf die zugehörige Anforderungsnachricht hin abzufragen.

12. Kommunikationsnetzwerk (300) nach Anspruch 11,
wobei der Speicher ein Speicher eines Netzwerkstacks ist, in dem offene Anfragen gespeichert werden.

13. Kommunikationsnetzwerk (300) nach Anspruch 10 oder 11,
wobei der Überwachungsserver (301) ausgebildet ist, ein unaufgefordert empfangenes Antwortpaket zu detektieren, wenn zu einer Bestätigung keine zugehörige Anforderung in dem Speicher vorliegt.

14. Kommunikationsnetzwerk (300) nach einem der der vorstehenden Ansprüche 10 bis 13,
wobei der Überwachungsserver (301) zwischen dem Zielserver (103) und zumindest einem Client (207a, 207b) des Kommunikationsnetzwerkes (300) lokalisiert ist, so dass der Überwachungsserver (301) Anforderungs- und Bestätigungsnachrichten an die Clients (207a, 207b) lesen kann und darauf basierend feststellen kann, ob eine Bestätigung auf eine Anfrage des jeweiligen Clients hin erfolgt ist oder nicht.

15. Computerprogramm mit einem Programmcode zum Ausführen des Verfahrens (800) nach einem der Ansprüche 1 bis 9 wenn der Programmcode mittels einer Datenverarbeitungsanlage ausgeführt wird.

## Claims

1. Method (800) for identifying a denial-of-service-attack, wherein the method (800) comprises the following steps:
receiving (801) a data packet originating from a target server (103) by a monitoring server (301), to which a response network address is assigned; and
outputting (802) a warning signal (402) by the monitoring server (301), if the received data packet is a response packet received unrequestedly by the monitoring server (301).

2. Method (800) according to claim 1,
wherein the denial-of-service-attack occurs in a communication network (300, 500), in which an attacker (201) comprising a source network address sends a request comprising the response network address to the target server (103), in order to request a transmission of a response packet to the response network address from the target server (103), wherein the response network address differs from the source network address of the attacker (201), wherein the target server (103) sends the response packet to the response network address in response to the reception of the request.

3. Method (800) according to claim 1 or 2,
wherein a target network address of the target server (103) is extracted from the received data packet and indicated by the warning signal (402).

4. Method (800) according to any one of the preceding claims,
wherein the warning signal (402) is transmitted to the target server (103) or to a network monitoring entity over a communication network by a further network entity, which differs from the monitoring server (301), in order to indicate the presence of a denial-of-service-attack.

5. Method (800) according to any one of the preceding claims,
wherein a plurality of different response network addresses are assigned to the monitoring server (301), wherein the plurality of the different response network addresses are monitored by the monitoring server (301), in order to detect the reception of the data packet.

6. Method (800) according to claim 5, comprising:
receiving a plurality of data packets by the monitoring server (301), wherein the received data packets were transmitted by the target server (103) to response network addresses, which are assigned to the monitoring server (301);
detecting a number of response packets in the plurality of the data packets, which were received unrequestedly by the monitoring server (301); and
outputting the warning signal (402) by the monitoring server (301), if the number of the detected response packets reaches or exceeds a predetermined threshold value.

7. Method (800) according to any one of the preceding claims,
wherein a data packet received by the monitoring server (301) is an unrequestedly received response packet, if the received response packet is not ascribed to a request transmitted to the target server (103) by the monitoring server (301) or if the received response packet originates from the target server (103).

8. Method (800) according to any one of the preceding claims, comprising:
determining if the received response packet is ascribed to a request transmitted to the target server (103) by the monitoring server (301); and
identifying the received response packet as unrequestedly received response packet, if the received response packet is not ascribed to a request transmitted to the target server (103) by the monitoring server (301).

9. Method (800) according to any one of the preceding claims,
wherein the received response packet is one of the following response packets:
- a synchronization acknowledgement SYN-ACK of the TCP transmission control protocol, wherein the request is a synchronization request SYN of the TCP transmission control protocol;
- an ICMP-Echo-data-packet, in particular an ICMP-data-packet of the type Echo Reply;
- a DNS-data-packet;
- an RST-packet; or
- a User-Datagram-Protocol-data-packet.

10. Communication network (300), comprising:
a target server (103), which is configured to send a response packet to the response network address in response to a receipt of a request comprising a response network address; and
a monitoring server (301), to which the response network address is assigned, and which is configured to receive a data packet originating from the target server (103) and output a warning signal, if the received data packet is a response packet received unrequestedly by the monitoring server (301).

11. Communication network (300) according to claim 10,
wherein the monitoring server (301) is equipped with a memory, in which previously sent request messages are buffered, in order to query the memory for the corresponding request message upon arrival of a response packet.

12. Communication network (300) according to claim 11,
wherein the memory is a memory of a network stack, in which open requests are stored.

13. Communication network (300) according to claim 10 or 11,
wherein the monitoring server (301) is configured to detect an unrequestedly received response packet, if no corresponding request for an acknowledgement is present in the memory.

14. Communication network (300) according to any one of the preceding claims 10 to 13,
wherein the monitoring server (301) is localized between the target server (103) and at least one client (207a, 207b) of the communication network (300), so that the monitoring server (301) can read request- and acknowledgement-messages to the clients (207a, 207b) and can determine based thereon, whether an acknowledgment of a request of the respective client is performed or not.

15. Computer program comprising a program code for performing the method (800) according to any one of claims 1 to 9 when the program code is executed by means of a data processing system.

## Revendications

1. Procédé (800) de détection d'une attaque par déni de service, dans lequel le procédé (800) comporte les étapes suivantes:
recevoir (801) un paquet de données généré par un serveur cible (103) par l'intermédiaire d'un serveur de surveillance (301), auquel une adresse de réseau de réponse est associée; et
délivrer en sortie (802) un signal d'alarme (402) par l'intermédiaire du serveur de surveillance (301), si le paquet de données reçu est un paquet de réponse reçu de façon non sollicitée par l'intermédiaire du serveur de surveillance (301).

2. Procédé (800) selon la revendication 1,
dans lequel l'attaque par déni de service est effectuée dans un réseau de communication (300, 500), dans lequel un agresseur (201) ayant une adresse de réseau de source envoie une demande comportant l'adresse de réseau de réponse au serveur cible (103), afin de demander au serveur cible (103) une transmission d'un paquet de réponse à l'adresse de réseau de réponse, dans lequel l'adresse de réseau de réponse est différente de l'adresse de réseau de source de l'agresseur (201), dans lequel le serveur cible (103) envoie le paquet de réponse à l'adresse de réseau de réponse en réponse à la réception de la demande.

3. Procédé (800) selon la revendication 1 ou 2,
dans lequel une adresse de réseau cible du serveur cible (103) est extraite du paquet de données reçu et est montrée par le signal d'alarme (402).

4. Procédé (800) selon l'une des revendications précédentes,
dans lequel le signal d'alarme (402) est envoyé au serveur cible (103) par l'intermédiaire d'un réseau de communication ou à une entité de surveillance de réseau par l'intermédiaire d'une autre entité de réseau qui est différente du serveur de surveillance (301), afin de monter la présence d'une attaque par déni de service.

5. Procédé (800) selon l'une des revendications précédentes,
dans lequel une pluralité d'adresses de réseau de réponse différentes est attribuée au serveur de surveillance (301), dans lequel la pluralité d'adresses de réseau de réponse différentes est surveillée par l'intermédiaire du serveur de surveillance (301), afin de détecter la réception du paquet de données.

6. Procédé (800) selon la revendication 5, comportant:
recevoir une pluralité de paquets de données par le biais du serveur de surveillance (301), dans lequel les paquets de données reçus étaient envoyés aux adresses de réseau de réponse par l'intermédiaire du serveur cible (103), lesquelles sont attribuées au serveur de surveillance (301);
détecter un nombre de paquets de réponse dans la pluralité de paquets de données, qui étaient reçus de façon non sollicitée par le biais du serveur de surveillance (301); et
délivrer en sortie le signal d'alarme (402) par le biais du serveur de surveillance (301), si le nombre de paquets détectés atteint ou dépasse une valeur de seuil prédéterminée.

7. Procédé (800) selon l'une des revendications précédentes,
dans lequel un paquet de données reçu par le biais du serveur de surveillance (301) est un paquet de réponse reçu de façon non sollicitée, si le paquet de réponse reçu n'est pas dû à une demande envoyée par le biais du serveur de surveillance (301) au serveur cible (103) ou si le paquet de réponse reçu provient du serveur cible (103).

8. Procédé (800) selon l'une des revendications précédentes, comportant:
déterminer si le paquet de réponse reçu est dû à une demande envoyée par le biais du serveur de surveillance (301) au serveur cible (103); et
marquer le paquet de réponse reçu comme un paquet de réponse reçu de façon non sollicitée, si le paquet de réponse reçu n'est pas dû à une demande envoyée par le serveur de surveillance (301) au serveur cible (103).

9. Procédé (800) selon l'une des revendications précédentes,
dans lequel le paquet de réponse reçu est l'un des paquets de réponse suivants:
- une confirmation de synchronisation SYN-ACK du protocole de contrôle de transmission TCP, dans lequel la demande est une demande de synchronisation SYN du protocole de contrôle de transmission TCP;
- un paquet de données echo-ICMP, en particulier un paquet de données ICMP de type echo reply;
- un paquet de données DNS;
- un paquet RST; ou
- un paquet de données protocol datagram user.

10. Réseau de communication (300), comportant:
un serveur cible (103) qui est destiné à envoyer un paquet de réponse à l'adresse de réseau de réponse en réponse à une réception d'une demande comportant une adresse de réseau de réponse; et
un serveur de surveillance (301) auquel l'adresse de réseau de réponse est assignée et qui est destiné à recevoir un paquet de données provenant du serveur cible (103) et à délivrer un signal d'alarme en sortie, si le paquet de données reçu est un paquet de réponse reçu de façon non sollicitée par le serveur de surveillance (301).

11. Réseau de communication (300) selon la revendication 10,
dans lequel le serveur de surveillance (301) est équipé d'une mémoire, dans laquelle des messages de demande envoyés précédemment sont stockés temporairement pour interroger la mémoire sur le message de demande correspondent lors de l'arrivée d'un paquet de réponse.

12. Réseau de communication (300) selon la revendication 11,
dans lequel la mémoire est une mémoire d'un stockage de réseau, dans laquelle des réponses ouvertes sont stockées.

13. Réseau de communication (300) selon la revendication 10 ou 11,
dans lequel le serveur de surveillance (301) est destiné à détecter un paquet de réponse reçu de façon non sollicitée si, dans le cas d'une confirmation, il n'existe aucune demande dans la mémoire.

14. Réseau de communication (300) selon l'une des revendications précédentes 10 à 13,
dans lequel le serveur de surveillance (301) est localisé entre le serveur cible (103) et au moins un client (207a, 207b) du réseau de communication (300), afin que le serveur de surveillance (301) puisse lire des messages de demande et de confirmation aux clients (207a, 207b) et, sur la base de ce fait, puisse déterminer si une confirmation à une demande du client correspondent a eu lieu ou pas.

15. Programme d'ordinateur comportant un code de programme pour exécuter le procédé (800) selon l'une des revendications 1 à 9 quand le code de programme est exécuté par le biais d'un système de traitement de données.
